(19)

Europäisches
Patentamt
European
Patent Office
Office européen
des brevets

(11) **EP 4 765 702 A1**

(12) **EUROPEAN PATENT APPLICATION**
published in accordance with Art. 153(4) EPC

(43) Date of publication:
**24.06.2026 Bulletin 2026/26**

(21) Application number: **23951957.2**

(22) Date of filing: **27.09.2023**

(51) International Patent Classification (IPC):
**H04L 1/1809** (2023.01)    **H04L 1/1607** (2023.01)

(52) Cooperative Patent Classification (CPC):
**H04L 1/1825; H04L 1/188; H04L 1/189;**
**Y02D 30/70**

(86) International application number:
**PCT/CN2023/122316**

(87) International publication number:
**WO 2025/055030 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.09.2023 CN 202311208308**

(71) Applicant: **Questyle Audio Technology Co., Ltd**
**Shenzhen, Guangdong 518000 (CN)**

(72) Inventor: **WANG, Fengshuo**
**Shenzhen, Guangdong 518000 (CN)**

(74) Representative: **Plavsa, Olga**
**Plavsa & Plavsa**
**Patentna kancelarija**
**Strumicka 51**
**11050 Beograd (RS)**

(54) **WIRELESS AUDIO TRANSMISSION METHOD, AUDIO DEVICE, AND STORAGE MEDIUM**

(57)    The invention provides a wireless audio transmission method, an audio device, and a non-transitory computer-readable storage medium. The invention first obtains the maximum duration ($T_1$) from when the transmitting end transmits an audio packet to when the transmitting end receives an acknowledgment packet fed back by the receiving end, as well as the duration difference ($T_0$) between the transmission times of two adjacent audio packets transmitted by the transmitting end. When facing the possibility of packet loss and retransmission, the transmitting end determines the quantity of retransmissions based on the maximum duration ($T_1$) and the duration difference ($T_0$), making the quantity of retransmissions more suitable for the actual audio transmission scenario. This can reduce the transmission latency and ensure audio quality.

FIG. 1

EP 4 765 702 A1

## Description

The invention is a Continuation of PCT Patent Application No. PCT/CN2023/122316, filed on September 27, 2023, which claims priority of China Patent Application No. CN2023112083080 filed on September 15, 2023. The contents of the above-identified applications are incorporated herein by reference.

## TECHNICAL FIELD

The invention relates to the field of audio transmission technology, in particular, to a wireless audio transmission method, an audio device, and a non-transitory computer-readable storage medium.

## BACKGROUND

With the widespread application of audio technology, wide variety of application scenarios have emerged. For some specialized applications, wireless audio transmission is required to have ultra-low latency. For example, in e-sports gaming scenarios, demand near-perfect synchronization between game visuals and the sound transmitted to headphones worn by the user during gameplay. Currently, mainstream wireless audio transmission solutions in the market are mainly based on Bluetooth technology. However, its latency thereof is generally above 200 ms; and even after optimization by some manufacturers, the latency still remains at approximately 80 ms. Such relatively high latency makes it difficult to satisfy the requirements of high-performance wireless audio transmission, thus adversely affecting user experience.

Therefore, there remains room for improvement in audio transmission performance.

## SUMARRY

In view of the above, the invention provides a wireless audio transmission method, an audio device, and a non-transitory computer-readable storage medium that can address the issue of relatively high latency in existing wireless audio transmission.

The invention provides a wireless audio transmission method, comprising: a transmitting end transmitting a current audio packet to a receiving end; the transmitting end obtaining a maximum duration $T_1$ and a duration difference $T_0$, wherein the maximum duration $T_1$ refers to a duration from a time when the transmitting end transmits an audio packet to a time when the transmitting end receives an acknowledgment packet fed back by the receiving end, the duration difference $T_0$ refers to a difference between transmission times of two adjacent audio packets transmitted by the transmitting end; the transmitting end determining whether the acknowledgment packet is received within the maximum duration $T_1$; if the acknowledgment packet is received within the maximum duration $T_1$, the transmitting end transmitting a next audio packet to the receiving end; if acknowledgment packet is not received within the maximum duration $T_1$, the transmitting end determining a quantity of retransmissions of the current audio packet based on the maximum duration $T_1$ and the duration difference $T_0$, and performing the determined quantity of retransmissions; and after confirming that the determined quantity of retransmissions are completed, the transmitting end transmitting the next audio packet to the receiving end.

In some other embodiments, the step of the transmitting end determining a quantity of retransmissions of the current audio packet based on the maximum duration $T_1$ and the duration difference $T_0$, and performing the determined quantity of retransmissions comprises: determining that if $T_1 \leq T_0/2$, the quantity of retransmissions of the current audio packet is set to be 1, or determining that $(T_1 * n) \leq T_0$, wherein n is the quantity of retransmissions of the current audio packet.

In some other embodiments, the step of the transmitting end determining the quantity of retransmissions of the current audio packet based on the maximum duration $T_1$ and the duration difference $T_0$, and performing the determined quantity of retransmissions comprises: determining that if $T_1 > T_0/2$, the quantity of retransmissions of the current audio packet is set to be 1.

In some other embodiments, the step of the transmitting end determining the quantity of retransmissions of the current audio packet based on the maximum duration $T_1$ and the duration difference $T_0$, and performing the determined quantity of retransmissions further comprising: determining that if $T_1 > T_0/2$, determining that a sum of the occupied storage of audio data of the retransmissions is equal to a buffer of the receiving end, or a difference between the sum of the occupied storage of audio data of the retransmissions and the buffer of the receiving end is less than the occupied storage of the audio data in the current audio packet.

In some other embodiments, the step of the transmitting end obtaining a maximum duration $T_1$ and a duration difference $T_0$ comprises: obtaining the maximum duration $T_1$ and the duration difference $T_0$ according to a predetermined correspondence relationship; wherein the step of the transmitting end determining the quantity of retransmissions of the current audio packet based on the maximum duration $T_1$ and the duration difference $T_0$, and performing the determined quantity of retransmissions comprises: determining the quantity of retransmissions of the current audio packet according to the following relationship formula: $T_2 = T_0 + ((T_1 * n)//T_0 +_1) * T_0 + T_3$ , wherein $T_2$ refers to the latency duration, $T_3$ refers to the duration from the time when the transmitting end transmits an audio packet to the time when the receiving end receives the audio packet, and n refers to the quantity of retransmissions of the current audio packet.

In some other embodiments, during step of performing the determined quantity of retransmissions is executed, the receiving end does not feedback the acknowledgment packet, and the duration difference between two adjacent retransmissions is $T_1$-$T_4$, wherein $T_4$ is the transmission duration of the acknowledgment packet.

In some other embodiments, the wireless audio transmission method further comprises: after determining that the determined quantity of retransmissions are completed, and if the receiving end has not received the current audio packet, copying the audio data of the previous audio packet and using the copied audio data as the audio data of the current audio packet.

In some other embodiments, during step of performing the determined quantity of retransmissions, the transmitting end performs lossless encoding on the audio data of the current audio packet and then performs retransmission.

This invention further provides an audio device, comprising a memory and a processor. The memory stores an audio transmission program, and when the audio transmission program is executed by the processor, the steps of the wireless audio transmission method as described above are implemented.

This invention further provides a non-transitory computer-readable storage medium, on which a computer program is stored. When the computer program is executed by a processor, the steps of the wireless audio transmission method as described above are implemented.

As described above, the invention first obtains the maximum duration $T_1$ from when the transmitting end transmits an audio packet to when the transmitting end receives an acknowledgment packet fed back by the receiving end, as well as the duration difference $T_0$ between the transmission times of two adjacent audio packets transmitted by the transmitting end. When facing the possibility of packet loss and retransmission, the transmitting end determines the quantity of retransmissions based on the maximum duration $T_1$ and the duration difference $T_0$, making the quantity of retransmissions more suitable for the actual audio transmission scenario. This can reduce the transmission latency and ensure audio quality.

**BRIEF DESCRIPTION OF THE DRAWINGS**

FIG. 1 is a schematic flowchart of a wireless audio transmission method provided in an embodiment of the invention.
FIG. 2 is a schematic diagram of the retransmission of an audio packet provided in an embodiment of the invention.
FIG. 3 is another schematic diagram of the retransmission of an audio packet provided in an embodiment of the invention.
FIG. 4 is yet another schematic diagram of the retransmission of an audio packet provided in an embodiment of the invention.

**DETAILED DESCRIPTION OF THE EMBODIMENTS**

To solve the foregoing problems in the prior art, the invention provides a wireless audio transmission method, an audio device, and a non-transitory computer-readable storage medium. These claimed subject matters are based on the same inventive concept, and the problem-solving principles thereof are substantially identical or similar. The implementations of the respective claimed subject matters may be referred to one another, and repeated descriptions are omitted herein for brevity.

To clarify the objectives, technical solutions, and advantages of the invention, the technical solutions of the invention will be clearly described below in conjunction with specific embodiments and the corresponding accompanying drawings. Obviously, the embodiments described below are merely a part of the embodiments of the invention, rather than all of the embodiments thereof. In the absence of conflicts, the various embodiments described below and their technical features may be combined with each other, and all such combinations shall also fall within the scope of the technical solutions of the invention.

In the description of the embodiments of the invention, terms such as "center," "longitudinal," "lateral," "length," "width," "thickness," "upper," "lower," "front," "rear," "left," "right," "vertical," "horizontal," "top," "bottom," "inner," "outer," "clockwise," and "counterclockwise" etc., indicate orientation or positional relationships based on those shown in the accompanying drawings. These terms are merely used to facilitate the description of the technical solutions of the respective embodiments, and do not imply or indicate that the device or element must have a specific orientation, or be constructed and operated in a specific orientation; thus, they shall not be construed as limitations on the invention.

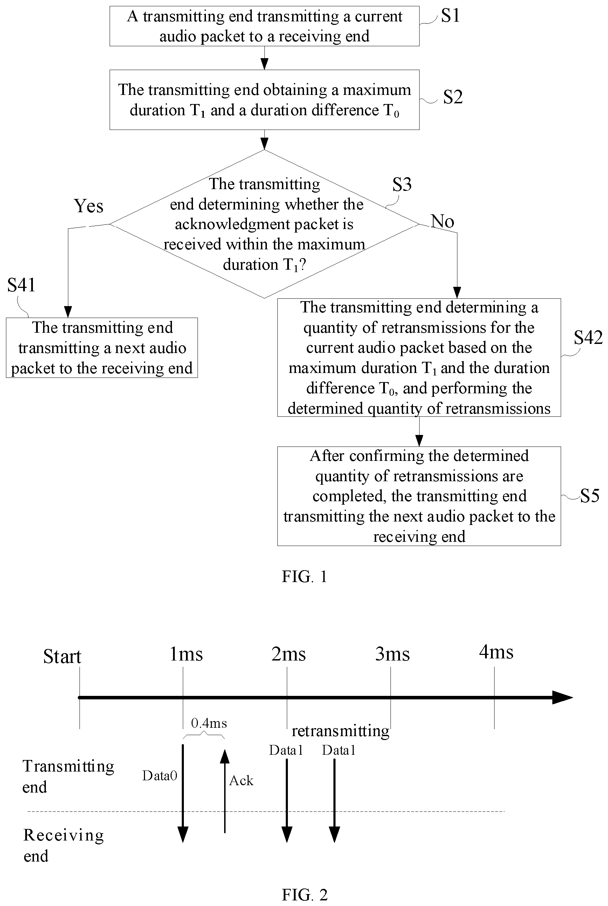

Referring to FIG. 1, an embodiment of the invention provides a wireless audio transmission method, wherein the executing entity of each step may be a transmitting end, and the wireless audio transmission method includes at least the following steps S1 to S5.

In the step S1: a transmitting end transmits a current audio packet to a receiving end.

In some embodiment, the wireless audio transmission method is applied to an audio transmitting device and is configured to implement pairing and connection with at least one audio receiving device, thereby forming an audio transmission system. The audio transmission system can have a one-to-one relationship (one audio transmitting device corresponds to one audio receiving device) or one-to-many relationship (one audio transmitting device corresponds to a plurality of audio receiving devices). Wherein the audio transmitting device may serve as the transmitting end, and the audio receiving device serve as the receiving end. The wireless audio transmission method provided in the invention may be based on Ultra Wide Band (UWB) technology. UWB technology has advantages including low system complexity, low power spectral density of the transmitted signal, insensitivity to channel fading, low interception capability, and high positioning accuracy, which makes it particularly suitable for high-speed wireless access in dense multipath environments such as indoor environments. Therefore, the devices connected through the wireless audio transmission method provided in the invention can achieve high-level, high-fidelity, and low-latency wireless audio transmission by adopting UWB technology.

In one example, the transmitting end may first enter a pairing mode and further set current preamble sequence information (e.g., a preamble code). Specifically, the preamble sequence information may be set as characters for pairing, for instance, set to 30. The preamble sequence information refers to a series of signals transmitted before transmitting valid signals, and its function is to remind the receiving end that the valid signals are to be transmitted, prompting the receiving end to pay attention to reception so as to avoid loss of the valid signals. More specifically, it assists the receiving end in performing controls such as frequency synchronization and automatic gain control.

The audio packet contains the audio data to be transmitted and also includes other necessary information. The specific manifestation and frame structure of the audio packet may refer to the prior art, and will not be described in detail herein.

In the step S2: the transmitting end obtains a maximum duration $T_1$ and a duration difference $T_0$, the maximum duration $T_1$ refers a duration from a time when the transmitting end transmits an audio packet to a time when the transmitting end receives an acknowledgment packet fed back by the receiving end, the duration difference $T_0$ refers to a difference between transmission times of two adjacent audio packets transmitted by the transmitting end.

Referring to FIGS. 2 to 4 together, assume that the transmitting end transmits the audio packet every 1 ms. Then, it must accumulate audio data for 1 ms from the beginning and then start transmission; this 1 ms is the duration difference $T_0$ between the transmitting end transmitting two adjacent audio packets. After the transmitting end transmits the audio packet each time, if the receiving end receives the audio packet, it will return an acknowledgment packet (i.e., Ack) to the transmitting end; if the transmitting end does not receive the acknowledgment packet fed back by the receiving end within a certain time, the transmitting end will retransmit the same data, that is, transmit the current audio packet again. Taking FIG. 2 as an example, the maximum duration $T_1$ from when the transmitting end transmits the audio packet to when it receives an acknowledgment packet fed back by the receiving end is 0.4 ms, then this certain time is 0.4 ms. In actual scenarios, it can be appropriately slightly longer than 0.4 ms to allow for fluctuations.

It should be understood that the so-called maximum duration $T_1$ refers to the time actually perceived by the upper-layer application, including: the duration from when the upper-layer application of the transmitting end transmits data to the system Radio Frequency(RF) for transmission, the duration required by the protocol to complete an actual transmission, the duration for transmitting the audio packet over the air, the duration for the receiving end to feed back the acknowledgment packet, the duration for the transmitting end to receive the acknowledgment packet, and the duration for the RF of the transmitting end to return the acknowledgment to its upper-layer application layer.

During audio transmission process, the roles of the transmitting end and the receiving end switch dynamically. For example, as shown in FIG. 2, after the transmitting end has completed transmitting the audio packet, the transmitting end switches its role to the receiving end to await an acknowledgment packet at the 1 ms mark. Conversely the receiving end switches its role to the transmitting end and transmit the acknowledgment packet upon receiving the audio packet and switch back to the receiving end thereafter. This process cycles repeatedly until the audio transmission is completed.

In the case of retransmission, after the original transmitting end switches its role to the receiving end, if it fails to receive the acknowledgment packet within the maximum duration $T_1$, it will transmit the original audio packet again.

In the step S3: the transmitting end determines whether the acknowledgment packet is received within the maximum duration $T_1$.

If the acknowledgment packet is received within the maximum duration $T_1$, the process proceeds to S41: the transmitting end transmits a next audio packet to the receiving end.

If the acknowledgment packet is not received within the maximum duration $T_1$, the process proceeds to S42: the transmitting end determines a quantity of retransmissions for the current audio packet based on the maximum duration $T_1$ and the duration difference $T_0$, and performs the determined quantity of retransmissions.

In the step S5: after confirming the determined quantity of retransmissions are completed, the transmitting end transmits the next audio packet to the receiving end.

Based on steps S2 and S42, the invention first obtains the maximum duration $T_1$(i.e., the duration from when the transmitting end transmits the audio packet to when the transmitting end receives an acknowledgment packet), and the duration difference $T_0$ (i.e., the difference between the transmission times of two adjacent audio packets transmitted by the transmitting end). When potential packet loss and retransmission occur, the quantity of retransmissions is determined according to this maximum duration $T_1$ and the duration difference $T_0$,

such that the quantity of retransmissions is adaptive to the actual audio transmission scenario. This not only reduce latency but also ensures audio quality.

In an example, as shown in Figure 2, if $T_1$ is 0.4 ms and $T_0$ is 1 ms, it can be determined that the maximum duration $T_1$ and the duration difference $T_0$ satisfy: $T_1 \leq T_0/2$. Then, it can be determined that the quantity of retransmissions for the current audio packet is 1, that is, one retransmission is performed. With a relatively small a quantity of retransmissions, latency can be reduced.

Furthermore, if the receiving end fails to receive the retransmitted current audio packet and thus does not feedback an acknowledgment packet to the transmitting end, the transmitting end will not receive the acknowledgment packet. To ensure audio quality, the receiving end, may adopt an appropriate packet loss compensation technique to perform packet loss compensation. For example, using Package Loss Concealment (PLC) technology, the audio data of the previous audio packet (i.e., the most recent audio packet for which the transmitting end successfully received the acknowledgment packet fed back by the receiving end before transmitting the current audio packet) is copied from a buffer of the receiving end and used as the audio data of the current audio packet.

In another embodiments, if the transmission efficiency of the audio transmission system is sufficiently high and the bandwidth is sufficiently large, and $T_0$ is several times $T_1$, for example, in an audio transmission scenario based on UWB technology, the quantity of retransmissions n may satisfy $(T_1*n) \leq T_0$, that is, all retransmissions may be completed within the duration difference $T_0$ (i.e., 1 ms). In this case, the buffer of the receiving end may be relatively small or nearly free of additional buffering for audio transmission.

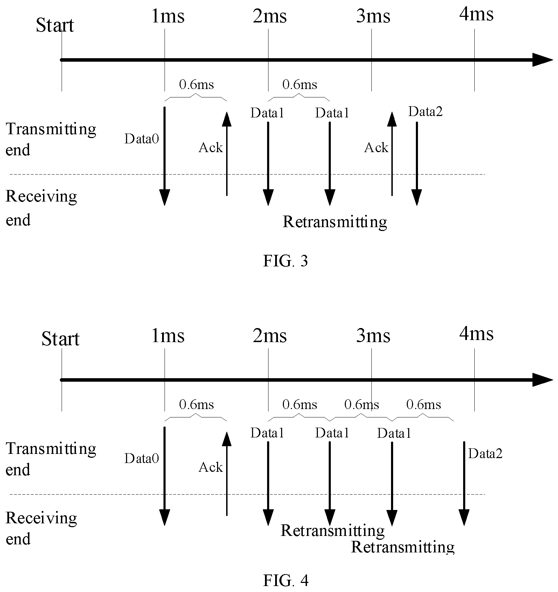

Referring to FIG. 3, if $T_1$ is 0.6 ms and $T_0$ is 1 ms, it can be determined that the maximum duration $T_1$ and the duration difference $T_0$ satisfy: $T_1 > T_0/2$. Then, the quantity of retransmissions for the current audio packet may be determined to be 1, that is, one retransmission is performed. With a relatively small quantity of retransmissions, transmission latency can be reduced.

In this example, the retransmission occupies the transmission time slot of the next audio packet. Originally, the audio packet Data2 must be transmitted at the 3 ms mark, however, due to retransmission, the transmission time slot becomes the retransmission time for the current audio packet Data1. Therefore, the transmitting end does not transmit the audio packet Data2 and instead continues to wait for the acknowledgment packet. If the acknowledgment packet is received within the maximum duration $T_1$, or if the maximum duration $T_1$ has elapsed regardless of whether the acknowledgment packet is received, the transmitting end transmits the next audio packet (i.e., the audio packet Data2) to the receiving end.

In another embodiment, as shown in FIG. 4, when it is determined that the maximum duration $T_1$ and the duration difference $T_0$ satisfy the condition: $T_1 > T_0/2$, it may be determined that the sum of the storage occupied by the audio data of the retransmissions is equal to the buffer of the receiving end, or the difference between the sum of the storage occupied occupied by the audio data of the retransmissions and the buffer of the receiving end is less than the storage occupied by the audio data in the current audio packet.

That is, if one retransmission is unsuccessful, the transmitting end may continue to occupy the transmission time slots of subsequent audio packets (including the next audio packet) and proceed with retransmission. However, this will result in delayed transmission of the subsequent audio packets. When multiple retransmissions are performed, to ensure that the receiving end can continue to play audio data during the transmission time slots of the subsequent audio packets, the receiving end must have sufficient buffering to store the audio data that should have been transmitted during these time slots. In other words, the transmitting end may continue to perform retransmissions, but the upper limit of the quantity of retransmissions is limited by the buffer of the receiving end.

In the examples shown in FIGS. 2 to 4, the overall latency of audio transmission is: 1 ms (i.e., $T_0$, the duration for which the transmitting end must buffer audio data)+transmission time+buffering time at the receiving end. Among them, the transmission time refers to the duration from when the transmitting end transmits the audio packet to when the receiving end receives the audio packet. In actual application scenarios, the data sizes of the acknowledgment packets fed back by the receiving end are the same, so the durations for feeding back each acknowledgment packet are consistent. Taking 0.07 ms as an example, the transmission time is $T_1$-0.07 ms. In addition, generally, to ensure smooth audio playback, the buffering time at the receiving end corresponds to the duration required for multiple retransmissions.

The invention may determine the quantity of retransmissions for the current audio packet according to the following relationship formula: $T_2=T_0+((T_1*n)//T_0+1)*T_0+T_3$. Wherein $T_2$ refers to the latency duration; $T_3$ refers to the duration from when the transmitting end transmits the audio packet to when the receiving end receives the audio packet, which is the transmission time; and n is the quantity of retransmissions for the current audio packet. In this relationship formula, $(T_1*n)//T_0$ is a positive integer obtained by integer division. For example, if $T_0$=1ms, $T_1$=0.3ms, and the quantity of retransmissions n=4, the buffering time at the receiving end is 2 ms. The calculation process is as follows: $((T_1*n)//T_0+1)*T_0=((0.3*4)//1+1)=(1.2//1+1)=2$.

In actual application scenarios, if the duration difference $T_0$ is changed, the maximum duration $T_1$ will change accordingly. The relationship between the maximum duration $T_1$ and the duration difference $T_0$ is not

linear because in addition to the actual audio data, each audio transmission also incurs some other overhead, such as the preamble sequence information and basic protocols. No matter how much storage the transmitted audio data occupies, the storage occupied by this overhead remains the same. For different audio transmission chips, the maximum duration $T_1$ and the duration difference $T_0$ may be different and must be tested according to the actual situation. In an example, the invention may obtain the maximum duration $T_1$ and the duration difference $T_0$ according to a preset correspondence relationship, which can be obtained based on the actual test results of multiple audio transmission chips. Each maximum duration $T_1$ has a corresponding duration difference $T_0$.

According to the relationship formula for calculating the buffering time at the receiving end, namely $((T_1 * n)//T_0 + 1) * T_0$, combined with the functional relationship formula for calculating the latency duration f(n), wherein $f(n) = ((T_1 * n)//T_0 + 1) * T_0$, the latency duration can be calculated by selecting different quantities of retransmissions n, different maximum durations $T_1$, and corresponding duration differences $T_0$. In other words, the invention may calculate the optimal maximum duration $T_1$ and the corresponding duration difference $T_0$ according to the latency duration that ensures the audio transmission and playback quality by adjusting different quantities of retransmissions n.

When performing the retransmission in S42, the receiving end may not feedback the acknowledgment packet, and the transmitting end continues to perform retransmissions. The duration difference between two adjacent retransmissions is $T_1 - T_4$, wherein $T_4$ refers to the transmission duration of the acknowledgment packet.

In this case, according to $T_2 = T_0 + ((T_1 * n)//T_0 + 1) * T_0 + T_3$, the maximum duration $T_1$ now only becomes the transmission time, that is, it becomes $T_1 - T_4$. In some examples, if the result of $(T_1 * n)/T_0$ just exceeds a certain integer (for example, the result may be 3.1), then the result of $(T_1 * n)//T_0$ is 3; if the maximum duration $T_1$ now only serves as the transmission time (the time required for the acknowledgment packet is excluded), the result of $(T_1 * n)/T_0$ will become 2.9, and the result of $(T_1 * n)//T_0$ is 2, thereby reducing the latency duration.

When performing the retransmission in S42, if it is determined that the receiving end has not received the current audio packet after completing the specified quantity of retrnsmissions, the audio data of the previous audio packet is copied and used as the audio data of the current audio packet. That is, to ensure audio quality, the receiving end may adopt an appropriate packet loss compensation technique to perform the packet loss compensation. For example, by using PLC technology, the audio data of the previous audio packet (i.e., the most recent audio packet for which the transmitting end successfully received the acknowledgment packet fed back by the receiving end before transmitting the current audio packet) is copied from the buffer of the receiving end and used as the audio data of the current audio packet.

When performing the retransmission in S42, the transmitting end may also perform lossless encoding (Free Lossless Audio Code, FLAC, also known as lossless audio compression coding) on the audio data of the current audio packet and then retransmit the encoded audio data. Using lossless encoding at the transmitting end can reduce amount of data to be transmitted, effectively reduce a value of the maximum duration $T_1$, and also improve a success rate of transmission because the amount of data to be transmitted is smaller; a decoding rate at the receiving end is also relatively high. However, the overall latency result includes encoding and decoding times.

In actual application scenarios, since the transmitting end needs to accumulate a certain amount of audio data for encoding, the duration during which the system performing encoding buffers the audio data and performs one encoding operation (which may be referred to as the encoding buffering duration) may be the same as the optimal duration difference $T_0$ between the transmission times of two adjacent audio packets by the transmitting end. If the encoding buffering duration is greater than the optimal duration difference $T_0$, the optimal duration difference $T_0$ will be adjusted to the encoding buffering duration; if the encoding buffering duration is less than the optimal duration difference $T_0$, it is likely to reduce the encoding efficiency.

The embodiments of the invention also provide an audio device, which includes a memory and a processor. The memory stores an audio transmission program; when the audio transmission program is executed by the processor, the steps of the wireless audio transmission method as described in any of the above examples are implemented. The audio device may serve as the transmitting end or the receiving end described above, and the specific form of the audio device is not limited by the invention.

The embodiments of the invention also provide a non-transitory computer-readable storage medium. The non-transitory computer-readable storage medium stores a computer program. When the computer program is executed by a processor, the steps of the wireless audio transmission method as described in any of the examples are performed.

This non-transitory computer-readable storage medium may include: Read -Only Memory (ROM), Random Access Memory (RAM), magnetic disks, optical disks, etc.

Since the instructions stored in this non-transitory computer-readable storage medium can execute the steps of any of the wireless audio transmission methods provided in the embodiments of the invention, all the beneficial effects that can be achieved by any of the wireless audio transmission methods provided in the embodiments of the invention can be realized. For details, refer to the previous embodiments, which are not repeated here.

The above descriptions are only some embodiments of the invention and are not intended to limit the patent scope of the invention. For those skilled in the art, any equivalent structural transformations made by using the content of the present specification and the accompanying drawings shall also be included within the patent protection scope of the invention.

In the present text, step codes such as S1 and S2 are used to express the corresponding content more clearly and briefly and do not constitute a substantial limitation on the order. Those skilled in the art may perform S2 first and then S1 in specific implementations, but all such modifications shall be within the patent protection scope of the invention.

Although terms such as "first" and "second" are used in this text to describe various types of information, these information should not be limited to these terms. These terms are only used to distinguish the same type of information from each other. In addition, the singular forms "a", "an", and "the" are intended to include the plural forms as well. The terms "or" and "and/or" are interpreted as inclusive, meaning either one or any combination. An exception to this definition occurs only when the combination of elements, functions, steps, or operations is inherently mutually exclusive in some way.

**Claims**

1.  A wireless audio transmission method, comprising:

    S1: a transmitting end transmitting a current audio packet to a receiving end;
    S2: the transmitting end obtaining a maximum duration $(T_1)$ and a duration difference $(T_0)$ , wherein the maximum duration $(T_1)$ refers to a duration from a time when the transmitting end transmits an audio packet to a time when the transmitting end receives an acknowledgment packet fed back by the receiving end, the duration difference $(T_0)$ refers to a difference between transmission times of two adjacent audio packets transmitted by the transmitting end;
    S3: the transmitting end determining whether the acknowledgment packet is received within the maximum duration $(T_1)$;
    S41: if the acknowledgment packet is received within the maximum duration $(T_1)$, the transmitting end transmitting a next audio packet to the receiving end;
    S42: if the acknowledgment packet is not received within the maximum duration $(T_1)$, the transmitting end determining a quantity of retransmissions of the current audio packet based on the maximum duration $(T_1)$ and the duration difference $(T_0)$, and performing the determined quantity of retransmissions; and
    S5: after confirming that the determined quantity of retransmissions are completed, the transmitting end transmitting the next audio packet to the receiving end.

2.  The wireless audio transmission method according to claim 1, wherein S42: the transmitting end determining the quantity of retransmissions of the current audio packet based on the maximum duration $(T_1)$ and the duration difference $(T_0)$ comprises: determining that if $T_1 \leq T_0/2$, the quantity of retransmissions of the current audio packet is set to be 1, or determining that $(T_1*n) \leq T_0$, wherein n is the quantity of retransmissions of the current audio packet.

3.  The wireless audio transmission method according to claim 1, wherein S42: the transmitting end determining the quantity of retransmissions of the current audio packet based on the maximum duration $(T_1)$ and the duration difference $(T_0)$ comprises: determining that if $T_1 > T_0/2$, the quantity of retransmissions of the current audio packet is set to be 1.

4.  The wireless audio transmission method according to claim 1, wherein S42: the transmitting end determining the quantity of retransmissions of the current audio packet based on the maximum duration $(T_1)$ and the duration difference $(T_0)$ further comprising: determining that if $T_1 > T_0/2$, determining that a sum of the occupied storage of audio data of the determined quantity of retransmissions is equal to a buffer of the receiving end, or a difference between the sum of the occupied storage of audio data of the determined quantity of retransmissions and the buffer of the receiving end is less than the occupied storage of the audio data in the current audio packet.

5.  The wireless audio transmission method according to claims 1 or 4, wherein S2: the transmitting end obtaining a maximum duration $(T_1)$ and a duration difference $(T_0)$, comprises: obtaining the maximum duration $(T_1)$ and the duration difference $(T_0)$ according to a predetermined correspondence relationship; wherein S42: the transmitting end determining the quantity of retransmissions of the current audio packet based on the maximum duration $(T_1)$ and the duration difference $(T_0)$ comprises:

    determining the quantity of retransmissions of the current audio packet according to the following relationship formula:

    $$T_2 = T_0 + ((T_1*n)//T_0 + 1)*T_0 + T_3$$

    wherein $T_2$ is the latency duration, $T_3$ is the duration from the time when the transmitting end transmits an audio packet to the time when the receiving end receives the audio packet, and n is the quantity of retransmissions of the current audio packet.

6. The wireless audio transmission method according to claim 5, wherein during S42: performing the determined quantity of retransmissions, the receiving end does not feedback the acknowledgment packet, and the duration difference between two adjacent retransmissions is $T_1$-$T_4$, wherein $T_4$ is the transmission duration of the acknowledgment packet.

7. The wireless audio transmission method according to claim 5, further comprises:
after S5: confirming that the determined quantity of retransmissions are completed, and if the receiving end has not received the current audio packet, copying the audio data of the previous audio packet and using the copied audio data as the audio data of the current audio packet.

8. The wireless audio transmission method according to claim 5, wherein during S42: performing the determined quantity of retransmissions, the transmitting end performs lossless encoding on the audio data of the current audio packet and then performs retransmission.

9. An audio device, comprising a memory and a processor, wherein the memory stores an audio transmission program, and when the audio transmission program is executed by the processor, the wireless audio transmission method according to any one of claims 1 to 8 is performed.

10. A non-transitory computer-readable storage medium, being configured to store a computer program, and when the computer program is executed by a processor, the wireless audio transmission method according to any one of claims 1 to 8 is performed.

A transmitting end transmitting a current audio packet to a receiving end — S1

The transmitting end obtaining a maximum duration $T_1$ and a duration difference $T_0$ — S2

The transmitting end determining whether the acknowledgment packet is received within the maximum duration $T_1$? — S3

Yes

No

S41

The transmitting end transmitting a next audio packet to the receiving end

The transmitting end determining a quantity of retransmissions for the current audio packet based on the maximum duration $T_1$ and the duration difference $T_0$, and performing the determined quantity of retransmissions — S42

After confirming the determined quantity of retransmissions are completed, the transmitting end transmitting the next audio packet to the receiving end — S5

FIG. 1

Start    1ms    2ms    3ms    4ms

0.4ms

retransmitting

Data1    Data1

Transmitting end

Data0    Ack

Receiving end

FIG. 2

FIG. 3

FIG. 4

## INTERNATIONAL SEARCH REPORT

| International application No. |
| --- |
| **PCT/CN2023/122316** |

| A. | CLASSIFICATION OF SUBJECT MATTER |
| --- | --- |
| | H04L 1/1809(2023.01)i; H04L 1/1607(2023.01)i |

According to International Patent Classification (IPC) or to both national classification and IPC

| B. | FIELDS SEARCHED |
| --- | --- |

Minimum documentation searched (classification system followed by classification symbols)
IPC: H04L

Documentation searched other than minimum documentation to the extent that such documents are included in the fields searched

Electronic data base consulted during the international search (name of data base and, where practicable, search terms used)
CNTXT, CNKI, DWPI, ENTXT: 数据包, 次数, 反馈, 音频, 重传, 发送, 传输, 周期, 往返时间, 回环时间, 时延, packet, retransmi+, number, transmi+, period, time, RTT, delay

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116112128 A (HAIMA CLOUD (TIANJIN) INFORMATION TECHNOLOGY CO., LTD.) 12 May 2023 (2023-05-12)<br>description, paragraphs [0015]-[0045] | 1-10 |
| A | CN 112769526 A (BANGYAN TECHNOLOGY CO., LTD.) 07 May 2021 (2021-05-07)<br>entire document | 1-10 |
| A | CN 113037440 A (TENCENT TECHNOLOGY (SHENZHEN) CO., LTD.) 25 June 2021 (2021-06-25)<br>entire document | 1-10 |
| A | CN 113259710 A (BARROT WIRELESS CO., LTD.) 13 August 2021 (2021-08-13)<br>entire document | 1-10 |
| A | CN 115276920 A (SHANGHAI WUQI MICROELECTRONICS CO., LTD.) 01 November 2022 (2022-11-01)<br>entire document | 1-10 |
| A | US 2018159662 A1 (FUJITSU LTD.) 07 June 2018 (2018-06-07)<br>entire document | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 May 2024** | **05 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122316**

| Patent document cited in search report | | | Publication date (day/month/year) | Patent family member(s) | | | Publication date (day/month/year) |
|---|---|---|---|---|---|---|---|
| CN | 116112128 | A | 12 May 2023 | None | | | |
| CN | 112769526 | A | 07 May 2021 | None | | | |
| CN | 113037440 | A | 25 June 2021 | HK | 40046442 | A0 | 05 November 2021 |
| | | | | WO | 2022247550 | A1 | 01 December 2022 |
| | | | | EP | 4224758 | A1 | 09 August 2023 |
| | | | | IN | 202337033607 | A | 15 September 2023 |
| | | | | JP | 2024509728 | W | 05 March 2024 |
| CN | 113259710 | A | 13 August 2021 | None | | | |
| CN | 115276920 | A | 01 November 2022 | None | | | |
| US | 2018159662 | A1 | 07 June 2018 | JP | 2018093481 | A | 14 June 2018 |
| | | | | EP | 3331282 | A1 | 06 June 2018 |
| | | | | CN | 108617007 | A | 02 October 2018 |

Form PCT/ISA/210 (patent family annex) (July 2022)

**REFERENCES CITED IN THE DESCRIPTION**

**Patent documents cited in the description**

- CN 2023122316 W

- CN 2023112083080